# EUROPEAN PATENT SPECIFICATION

(11) **EP 2 162 478 B1**
(45) Date of publication and mention of the grant of the patent: **30.12.2020**
(21) Application number: 08768638.2
(22) Date of filing: 19.06.2008
(51) Int. Cl.: C08F 283/12, C08G 77/04, C08G 77/08, C08G 77/18, C08L 83/06, C08K 3/00, C08K 3/38, B32B 27/04, B32B 27/20, B32B 27/28

(54) **SILICONE RESIN COMPOSITES FOR HIGH TEMPERATURE DURABLE ELASTIC COMPOSITE APPLICATIONS AND METHODS FOR FABRICATING SAME**
SILIKONHARZVERBUNDWERKSTOFFE FÜR ANWENDUNGEN IM BEREICH DER HOCHTEMPERATURBESTÄNDIGEN ELASTISCHEN VERBUNDWERKSTOFFE UND HERSTELLUNGSVERFAHREN DAFÜR
COMPOSITES DE RÉSINE SILICONE POUR APPLICATIONS DE COMPOSITES ÉLASTIQUES DURABLES À TEMPÉRATURE ÉLEVÉE ET LEURS PROCÉDÉS DE PRODUCTION

(30) Priority: 19.06.2007 US 936472 P
(43) Date of publication of application: 17.03.2010
(73) Proprietor: Flexible Ceramics, Inc. A California Corporation, Palm Springs, CA 92262 (US)
(72) Inventor: CLARKE, William A., Merced, CA 95340 (US)
(74) Representative: Manitz Finsterwald Patent- und Rechtsanwaltspartnerschaft mbB
(86) International application number: PCT/US2008/007667
(87) International publication number: WO 2008/156821

(56) References cited:
- US-A- 5 552 466
- US-A- 6 093 763
- US-A1- 2003 139 504
- US-B1- 6 183 873
- US-B1- 6 638 572
- NIEMCZYK ET AL.: "Thermal stability and flame retardancy of polypropylene composites containing siloxane-silsesquioxane resins", POLYMERS, vol. 10, 1019, 13 September 2018 (2018-09-13), pages 1-16,
- "Materion" In: Core Inorganic Chemicals: 1 January 2020 (2020-01-01)

## Description

The present invention relates to an elastic composite in accordance with claim 1, e.g. for use in high temperature elastic composite applications and is a further development of the silicone composite of US-B-6 183 873. That reference describes a silicone composite formed by heat treating a prepreg having 30 to 80 weight % reinforcement and 20 to 50 weight percent of a resin blend and added filler, the resin blend and added filler consisting of: a high molecular-weight (MW) flake silicone resin; an intermediate MW liquid precursor and optionally, a low MW liquid resin e.g., 5000MW; submicron boron nitride as catalyst in a resin to aggregate weight ratio of 20/1 to 2.5/1, where the added filler is a submicron refractory filler selected from the group comprising submicron silica, finely divided silica gel, fumed silica, diatomaceous earth, silicon carbide, alumina, zirconia and mixtures thereof.

At the time of filing the above referenced US-B-6 183 873 it was believed that the boron nitride was the catalyst.

US 2003/0139504 A1 is a further prior art document and discloses a flame retardant resinous compositions comprising (i) at least one aromatic polycarbonate, (ii) at least one silicone source, (iii) at least one boron source, and (iv) optionally at least one member selected from the group consisting of an antidrip agent, a second thermoplastic resin which is not a polycarbonate resin, and a rubber modified graft copolymer. In US 2003/0139504 A1 also methods for making such compositions are disclosed.

The present invention is directed to a further improvement of the silicone composite known from US-B-6 183 873.

In order to achieve this improvement there is provided, in accordance with the present invention, an elastic composite according to claim 1.

The improvement is based firstly on the recognition that it is not actually the boron nitride that is the catalyst but instead boron oxide which may be contained in a small quantity in commercially available boron nitride, in contrast to pure boron nitride (which is not specified in US-B-6 183 873) but the significance of which has hitherto not been appreciated. Hence an element of the present invention is the invention that the boron oxide content of the boron oxide/boron nitride aggregate should be selected to be 0.5 to 5 wt.% of the boron oxide/nitride aggregate content.

In addition it has been found that the flexibility of the composite can be greatly enhanced if the prepreg is heat treated to have a porosity of 10 to 20% and the porosity is filled with a densification resin

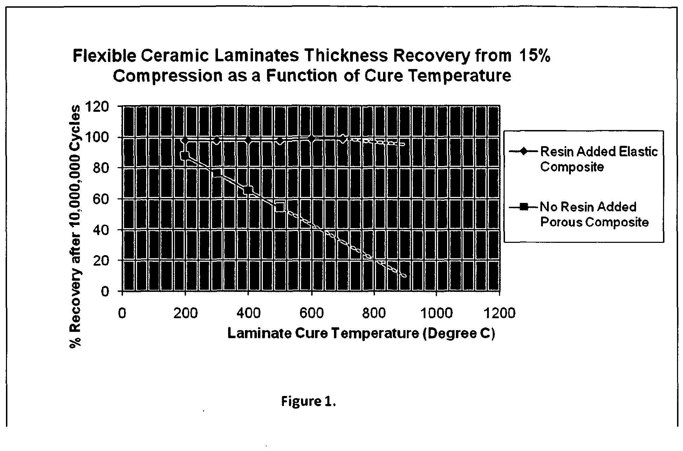

Thus the invention results in elastic composites according to claim 1. When the composites according to the invention are heat cured from 200 to 1000°C the % recovery from 15% compression fatigue cycle testing for 10,000,000 cycles drops off with increasing cure temperature as shown in Figure 1.

When these same porous composites are vacuum impregnated with the resin blend; they endure the same 10,000,000 fatigue cycles with greater than 95% recovery also shown in Figure 1. The composites have endured over 4 years internal combustion (IC) engine pressurized severe exhaust manifold temperatures without seal leakage or burn through from exhaust gas at sustained and spike temperatures approaching 1000°C. The composites have passed FAA fire penetration, burn through, heat release (< 10 kW/m²), smoke density and Boeing toxicity testing per BSS 7239.

By way of completeness a description will now be given of the previously published art

The Beckley patent, US 5,552,466 is specific to teach methods of producing processable resin blends that produce high density silica ceramics in the red heat zone. The preferred catalyst,
- I zinc hexanoic acid produces a high cross-link density polymer by the Beckley methods of processing that favor the formation of high yield ceramic composites compared the high temperature elastic silicone polymers produced by the Clarke methods of using boron nitride, silica and a preferred boron oxide catalyst. No mention is made of compression-recovery properties common to Clarke related composites.

The Boisvert, et al. patent, US 5,972,512 is specific to teach silanol-silanol condensation cured methylsilsesquioxane resins enabling the fabrication of non-burning composites with superior performance than organic laminates. No mention is made of producing a high temperature elastic silicone containing boron nitride and silica to produce the fire resistant elastic silicone laminate that slowly transforms into a flexible ceramic then ceramic with no burn through at 2000°F after 15 minutes. Also, the fire resistance is specific to methyl resins overlooking the high thermal advantages of phenyl resins even when used sparingly. Also, elastic composites have dissimilar materials joining advantages not mentioned in the Boisvert patent.

The Clarke patent, US 6,093,763 is specific to teach the use of the zinc hexanoic acid catalyst for a specific ratio of 2:1 for two specific silicon resins with boron nitride as filler. The zinc hexanoic acid catalyst produces a different high cross-link density polymer than the preferred elastic composite produced from a reaction mixture of boron nitride, silica and boron oxide and controlled reaction methods. The amount of zinc catalyst required to enable the sealant to perform is also excessive in comparison to the boron oxide catalyst which is sparingly used to favor a slow reaction for producing elastic composites.

The Clarke patent, US 6,161,520 is specific to teach that the gasket materials derived from Clarke's copending US patent applications Ser. Nos. 08/962,782; 08/962,783 and 09/185,282, all teach the required use of boron nitride as the catalyst for condensation polymerization of the resin blend needed to produce the gaskets. Clarke has verified that boron nitride is not a catalyst as incorrectly claimed. Clarke verified the certainty that boron nitride is not a catalyst by attempting to repeat the 873 patent's Figure 1 "gel" curve at 177[deg.]C using the preferred CERAC, Inc. item #B-1084- 99.5% pure boron nitride. Other research associates have also confirmed the certainty that boron nitride is not a silicone condensation catalyst. Numerous possible contaminates would need to be investigated to find the actual catalyst or combination of catalysts including the possibility of humidity. No mention is made of using boron nitride, silica and boron oxide as a reaction mixture processed in a rotating cylinder at ambient temperature to favor the production of a high temperature elastic composite. Neither is boron oxide mentioned as catalyst with boron nitride cost advantage addressed when boron oxide is used as a residual from the chemical processing (Reference 1) of boron nitride.

The Clarke patent, US 6,183,873 B1 is specific to teach the use of boron nitride as the catalyst in producing polysiloxane resin formulations for hot melt or wet impregnation of ceramic reinforcements. As stated above, boron nitride is not a catalyst as incorrectly claimed. The more costly and toxic hot melt and wet processing methods of the above described '873 patent are eliminated with the superior ambient temperature methods addressed by the inventor. No resin formulations using boron oxide as the catalyst (Table 6) are mentioned. Additionally, the methods of producing "flexible ceramic" high temperature elastic laminates are not addressed. Also, the use of laser processing (up to 16,500°C) to increase the tensile strength by 25% and form ceramic sealed edges is not addressed. The economical advantage of using residual boron oxide contained in boron nitride as a source for the catalyst addition is not mentioned.

The Clarke SAE 2002-01-0332 paper (Reference 2) refers to high purity boron oxide as a Lewis acid catalyst with silica mentioned as an unobvious inhibitor for these silicone condensation polymerization catalysts. High cost boron nitride and boron oxide are added separately. No mention is made of producing resin formulations using boron nitride containing boron oxide residues as a source of boron oxide catalyst and cost savings advantage. Additionally, the methods of producing "flexible-ceramic" laminates capable of high-temperature elastic recovery (Figure 1) are not addressed. Also, the use of laser processing (up to 16,500°C) to increase the tensile strength by up to 25% and forming ceramic sealed edges is not addressed. The "self extinguishing" property of the elastic composite when heat is removed is also not mentioned. This is an essential requirement to prevent combustion pre-ignition in superior fuel saving flexible ceramic composite ignition devices.

Reference is also made for the sake of completeness to the following publications:
1. Lenonis, D.A.; Tereshko, J. and CM. Andersen, Boron Nitride Powder-A High- Performance Alternative for Solid Lubrication, Advanced Ceramics Corporation, A Sterling Publication (1994).
2. Clarke, W.A.; Azzazy, M and West, R., Reinventing the Internal Combustion Engine Head and Exhaust Gaskets, Clarke & Associates, SAE PAPER. 2002-01-0332. (March 4, 2002) pp.2-3.
3. Thompson, Raymond, The Chemistry of Metal Borides and Related Compounds, reprinted from PROGRESS IN BORON CHEMISTRY, Vol. 2, Pergamon Press, (1969) p.200.
4. Thompson, ibid, pp 212-213.
5. Sorenson W.R. and W. T. Campbell, Preparative Methods of Polymer Chemistry, John Wiley &, Sons, (1968) p.387.
6. Rochow, E. G., Chemistry of the Silicones, Second Edition, Wiley, (1951).
7. Thompson, ibid, p.217.

The present inventor has evaluated (Reference 2) ceramic oxide catalysts (see Table 1) and found boron and aluminum oxide to be Lewis acid catalysts for ambient temperature activating silicone reactions with the unexpected inhibiting capability of submicron silica. Also, boron oxide is a common contaminant of boron nitride commercial production requiring costly leaching stages to remove it. Because of this significant cost savings advantage, it is the objective of this invention to exploit the use of lower cost boron nitride containing residual boron oxide for catalyzing the resin reaction mixtures.

**Table 1**

| Silicone Resin "Gel" Times Taken at 177°C When Catalyzed By B₂O₃ or Al₂O₃ and Inhibited by SiO₂. Parts by Weight | | | | |
|---|---|---|---|---|
| Silicone Resin | B₂O₃ | Al₂O₃ | SiO₂ | Gel Time @ 177°C Minutes |
| 100 | 0.25 | -- | -- | 2.5 |
| 100 | 0.10 | -- | -- | 4.5 |
| 100 | 0.25 | 0 | 5 | 4.5 |
| 100 | 0.25 | 0 | 10 | 9.5 |
| 100 | 0 | 0.10 | 0 | 2.0 |
| 100 | 0 | 0.05 | 0 | 4.5 |
| 100 | 0 | 0.50 | 5 | 7.0 |
| 100 | 0 | 1.00 | 10 | 7.0 |

Both B₂O₃ and Al₂O₃ behave as Lewis Acids in facilitating the condensation reaction of the selected silicone resin formulation. The Al₂O₃ is twice as effective on a weight basis.

It is a further objective of the present invention to exploit the multipurpose advantages of boron oxide throughout all phase transformations of the resin blend from initial condensation polymerization to cured, pyrolyzed and ceramitized composite articles. Where boron oxide initially is used for dehydrating the silanol-silanol condensation reactions. The boron nitride also serves as a source (Reference 3) for boron oxide when it forms a stable oxidation protective boron oxide film at approximately 500±50°C which is stable at red heat (600 to 1000°C) until the vapor pressure of boron oxide becomes appreciable (Reference 4) above 1200°C. The rate controlling step is at most temperatures, the diffusion of oxygen through the boric oxide surface film (Reference 4).The hot surface is "self extinguishing" when heat is removed - a significant advantage in preventing combustion engine chamber preignition. Boron oxide is also used in combination with alumina which is a more effective catalyst on a weight basis and silica which inhibits both catalysts allowing them to be used in greater quantities than would otherwise be possible.

It is a further objective of the present invention to design and prepare flexible and resilient composite materials which will perform at 500°C temperatures, i.e., 200°C higher than those encountered (Reference 5) in the past while still retaining low temperature elastic sealing advantages. These materials are at the same time "preceramic" capable of producing high yield ceramics upon being pyrolyzed to 1000°C.

It is a further objective of this invention to design and prepare "flexible ceramic" composite laminates from the above elastic composite structures, where "flexible ceramics" are flexible elastic composite structures heat processed in localized regions of the structure to create part ceramic and part flexible elastic "hybrid" composite structures.

This same approach is also achieved in reverse by vacuum filling the less elastic high temperature porous elastic composites (see Figure 1) with the elastic resin blend then heat curing the resin to 150°C to assure the formation of a highly elastic resin within the less elastic matrix producing a set of hybrid elastic matrices composites capable (as revealed in Figure 1) of making elastic composites with highly durable % recovery of the higher heat cured porous composites.

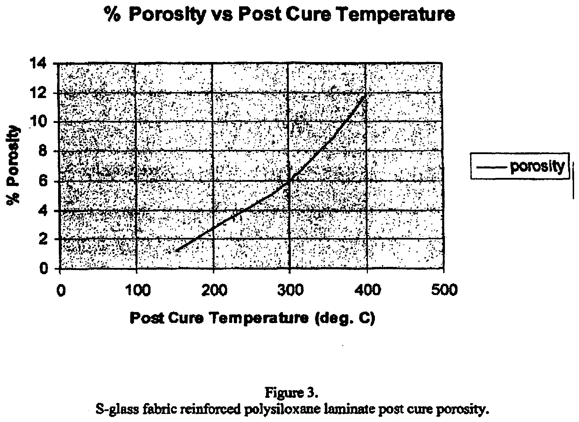

It is a further objective of this invention to produce essentially nontoxic, solventless resin blends from silicone condensation polymerization carried out at ambient temperature in equipment designed to allow the polymerization to start in excess acetone (sufficient to dissolve the flake resin) while continuously co-mingling the solid additives (boron nitride, silica and boron oxide) within the polymerizing resin reaction mass, thereby producing a thermally stable elastic resin blend for producing high temperature cured elastic composites. It is a further objective of this invention to provide a practical method of utilizing the cured polymer porosity (see Figure 3) for providing a secondary sealant application as the composite silicone polymer material is compressed up to 15% of its thickness releasing the sealant as required at the sealing surface. The method discovered for filling the porosity in one operation is a thermal quench reducing the porosity from up to 12% to less than 1% in one operation.

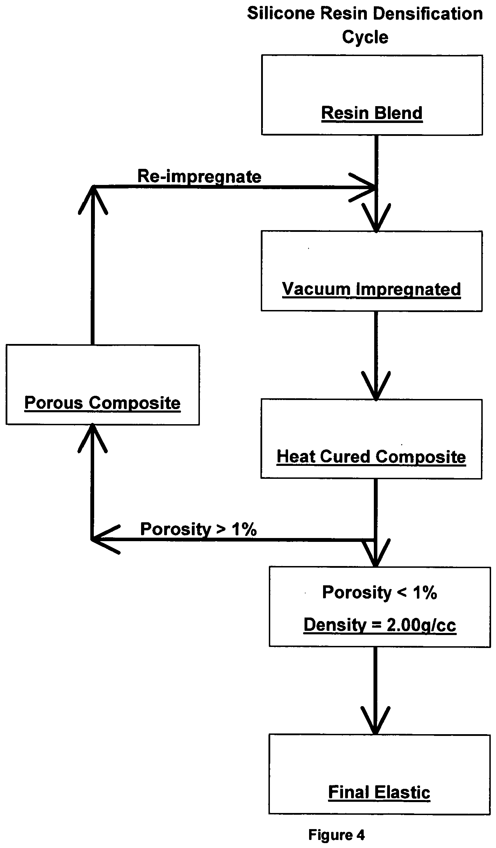

It is the further objective of this invention to provide a matrix resin densification method (see Figure 4) for filling the porosity produced when the organic material the polysiloxane resins is pyrolyzed away at temperatures greater than 300°C. High temperature cured composites have a porosity from 10 to 20% when pyrolyzed from 300 to 1000°C which provides an opportunity to form hybrid elastic matrices and produce elastic composites according to the invention such as shown in Figure 1 with high elastic capability depending on the desired final composite required performance temperature.

It is the further objective of this invention to provide elastic composites with different ceramic sealed edges by selecting different composite reinforcements for laser cutting fabrication of the preferred ceramic edge.

It is the further objective of this invention to enable the fabrication of composite polysiloxane flexible ceramic gaskets that can complete up to 523,036 km (325,000 miles) endurance testing (241,402 km (150,000 mile) requirement) in cab fleets (all testing undertaken under confidentiality agreement).

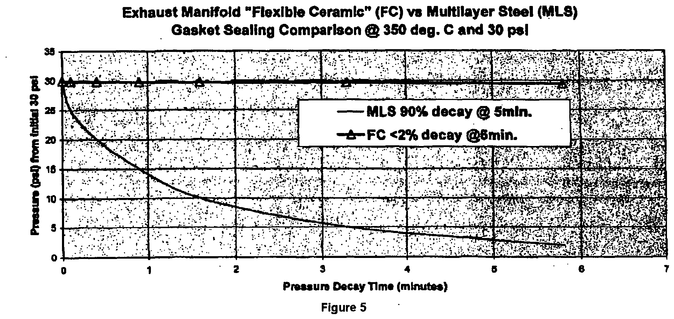

It is another objective of this invention to enable the fabrication of discontinuous chopped fiber filled high temperature (up to 500°C) "liquid" gaskets that can perform up to 6,640 hours (testing undertaken under confidentiality agreement) on 460 V8 truck engine dynamometer testing. Similarly, helical overlapping "○" rings as shown in Figure 5 can be made.

It is a further objective of this invention to enable IC engine ignition devices to be prepared as flexible ceramic structures embedded with electric circuits that enable multiple spark ignition combustion per chamber with up to 33% fuel savings (testing under confidentiality agreement). This invention extends the elastic range of silicone composite materials from the typically -40 to 300°C to temperatures within the "red heat", i.e., up to 600 to 1000°C range of applications. The polymer matrix composite comprises a matrix of cured high, intermediate and optionally low molecular weight silicone resins including boron nitride and silica additives and reinforcing material. When the resin blend is combined with reinforcement to make composites and heat cured from 200 to 1000°C the % recovery from 15% compression fatigue (ASTM-F-36 Rev. 95) cycle testing for 10,000,000 cycles, drops off with increasing cure temperature above 500°C. Conversely, these same porous composites (heat cured up to 750°C) when "densification" processed with the resin blend; unexpectedly endure the same 10,000,000 fatigue cycles with greater than 95% recovery (see Figure 1).The composites have endured over 4 years internal combustion (IC) engine pressurized severe exhaust manifold temperatures without seal leakage or burn through from exhaust gas at sustained and spike temperatures approaching 1000°C. The composites have passed FAA fire penetration, burn through, heat release (< 10 kW/m²), smoke density and Boeing toxicity testing per BSS 7239.

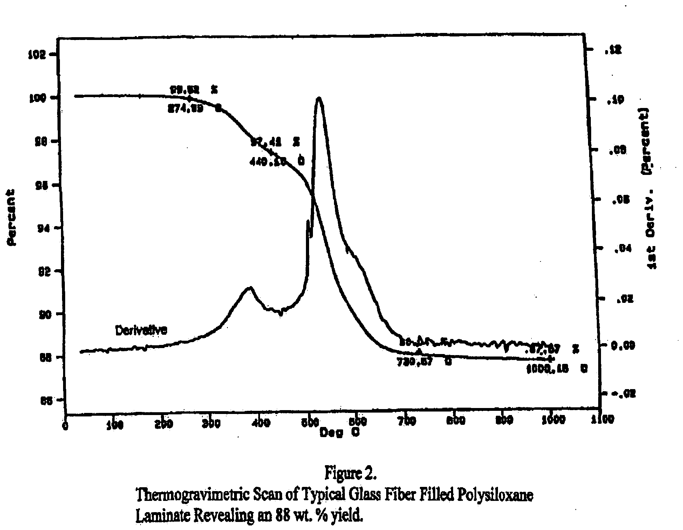

Boron oxide is a multipurpose additive. The boron oxide dehydrates the silanol-silanol condensation reaction to produce elastic polymers with high thermal properties, while simultaneously, the boron nitride part of the additive reaction mixture combined with silica, enables the formation of a superior flexible elastic matrix within the reinforced polysiloxane composites which is not possible with silica alone or boron nitride alone up to 1000°C (see Figure 2). From 300 to 1000°C the burn off of the organic matter of the precursor silicone resins affords the opportunity to create new elastic composites with hybrid elastic matrices made by densification processing the 10 to 20% porosity of the high temperature cured composites with the resin blend as shown in Figure 4.

When the composites are heat treated in localized regions of their structures, the heated regions become high yield (>90%) ceramic while the nonheated areas remain flexible. The pyrolyzed preceramic and ceramic regions' porosity has been filled in a rapid thermal quench with the high temperature elastic matrix impregnant and cured to the desired elastic's performance temperature. Alternatively, laser cut ceramic or refractory fiber reinforced elastic laminates produce flexible composites with ceramic sealed edges, called Flexible Ceramics(TM). Varying the ceramic fibers produces different ceramic sealed edges. The multifunctional catalyst used throughout is boron oxide which can be supplied as a residual constituent of commercial reaction produced boron nitride. This approach provides a significant cost savings in eliminating the costly leaching operations needed to remove the boron oxide.

The resin blend's processing capabilities include ambient temperature solventless prepreg processing, heat barrier material enabling multiplaten press "book stack" laminated parts to be laser cut in multiple stacks in one multiple part cost advantaged operation, thermal quench impregnating, laser cutting formation of ceramic sealed laminate edges, and resin infusion mold processing of large structures, silk screening multiple parts with raised coatings and identification marking.

Additionally, the resin blend's products include "○" rings, micro-rod filled sealants that can be "pyroformed" into high-temperature viscoelastic engineering gaskets, adhesives, surface and subsurface wear protective coatings, oxidation protective coatings, porosity stored compliant coatings, pressure activated fastener thread high temperature adhesives, Pyrex(TM) glass adhesives, high temperature computer boards and fasteners, electrical and heat insulators, and affordable up to 33% fuel saving devices.

Many prototype parts have been made which demonstrate (under confidentiality agreement testing) that most engine components of diesel, internal combustion (IC) and turbine engines that operate up to 1000°C can be made into fiber reinforced superior high temperature elastic composites made with the resin blend. Examples include engine blocks, cylinder heads, engine gaskets, push rods, valves, pistons, brakes, multiple ignition fuel saving devices, turbine engine combustion liners, compression blades, diesel engine head and exhaust gaskets and rocket motors, fire walls, and high-temperature viscoelastic exhaust manifold, pipe, catalytic converter gaskets and sealants.

Preferred embodiments of the invention are set forth in the appended claims.

### BRIEF DESCRIPTION OF THE DRAWINGS

Fig. 1 is a graph of laminate thickness recovery as a function of cure temperature;
Fig. 2 is a thermogravimetric scan of glass fiber filled polysiloxane laminate; Fig. 3 is graph of percent porosity as a function of post cure temperature;
Fig. 4 is a process for a silicone resin densification cycle; and
Fig. 5 is a graph illustrating pressure decay curves for flexible ceramic and multilayer steel gaskets.

### DESCRIPTION OF THE PREFERRED EMBODIMENTS

Durability testing (under confidentiality agreement) of "flexible ceramic" internal combustion engine exhaust manifold gaskets has revealed that they can perform up to and exceeding 523,036 km (350,000) miles cab fleet durability testing (typical automotive requirement is 241,402 km (150,000 miles)) with "spike" temperatures up to 500°C (932°F). Figure 1 shows the percent compression recovery is approximately 87% at 200°C and 63% at 400°C which is the exhaust gasket's clamping surface performance temperature.

To accomplish the above product performance, the resin blend additive materials are selected with high flexible and thermal resistant properties. The unique resin blend is typically mixed from three silicone resins and two or more ceramic additives. To accomplish the elastic compression recovery performance (see Figure 1) of composites made from the resin blend's "prepreg" several different composite elements are utilized, the most important being the resin blend composition and methods of processing. The resin blend is formulated from a high-molecular-weight "flake resin" and intermediate liquid silicone resin precursor and optionally a lower molecular weight silicone resin. These resins are selected to have different functionality such as listed in Table 2.

**Table 2 (Reference 6)**

| Organosilicon preferred functionalities (where R=methyl or phenyl): |
|---|
| (RSiO_{3/2})ₙ, silsesquioxane polymers, *e.g*., methylphenylsesquisiloxane |
| R₂Si-OH, silanol (hydroxyl) terminated, polydimethylsiloxane, *e.g*., HOSiMe₂O-(SiMe₂O)n-SiMe₂OH, and |
| Me₃SiO-, trimethylsilyl terminated, e.g.,Me₃SiO-(SiMe₂O)ₙ-SiMe₃, or |
| |
| Dimethylpolysiloxane polymers containing methyl or phenyl silsesquioxanes, with optional methoxy-termination, *e.g*., CH₃O-(SiMe₂O)ₙ- |

A variety of polysiloxane oligomers are well known in the art that exhibit similar functionality; however, the invention's organic groups are the methyl and phenyl because of their high thermal stability.

A typical resin blend in accordance with the invention is given in Table 3.

**Table 3**

| Typical Resin Blend | | |
|---|---|---|
| | Parts bv Weight | |
| **Resin Blend Formulation** | **In General** | **Preferred** |
| (1) Dimethylsiloxane polymers containing phenyl silsesquioxanes | 40-70 | 65 |
| (2) Dimethylsiloxane polymers containing methyl silsesequioxanes. | 5-25 | 10 |
| (3) silanol terminated, polydimethylsiloxane | 5-25 | 25 |
| (4) boron nitride & residual boron oxide | 5-40 | 20 |
| (5) boron oxide content of (4) | 0.1-1.2 | 0.40 |
| (6) silica | 3-15 | 6 |
| or other filler such as | | |
| silica gel or | 3-15 | |
| silicon carbide or | 15-25 | |
| alumina or silica fiber | 15-25 | |
| reinforced polysiloxane rods | | |

In Table 4, the formulation using preferred commercially available resins is set forth.

**Table 4**

| Preferred Commercially Available Resins | | | | |
|---|---|---|---|---|
| | Parts by Weight | | | |
| Formulations Using | GE Silicones | | Dow Corning | |
| Commercial Resins | In General | Preferred | In General | Preferred |
| (1) Dimethyl polymers w/ phenyl silsesquioxanes, high MW | 40-70 | 65 (SR 355) | 40-70 | 65 (233) (or 249) |
| (2) Dimethyl polymers w/ methyl silsesquioxanes, methoxy terminated | 5-25 | 10 (TPR-179) | 10-60 | 35 (3037) covers items (2) and (3) |
| (3) Silanol terminated Polymethylsiloxane | 5-25 | 25 (TPR-178) | | |

### ADDITIVES

The preferred resin blend additives are silica and boron nitride retaining 2±1.0 wt% residual boron oxide. These additives provide high thermal capabilities.

### Silica/Boron Nitride:

Silica was discovered by Clarke (Reference 2) to slow down the time it takes for the silicone resin reaction mass catalyzed by boron oxide to reach "gel" at 177°C (Table 1). Using this capability, the silicone reaction mass is slowly polymerized at ambient temperature in excess acetone favoring the formation of high molecular weight silicone polymers with high elastic increased linear chain (Si-O-Si) growth. Additionally, a mixture of silica and boron nitride added to the silicone resin reaction mass produces a superior flexible elastic polymer with high-temperature elastic properties than can not be produced using silica or boron nitride alone.

Silica alone will increase the polymer modulus causing it to become none-lastic above 300°C. Boron nitride alone at the suggested 16 wt% will produce an excessively plasticized soft low modulus weak polymer that will fail in interlaminar shear loading as a gasket. But when boron nitride and silica are in a 10/6 to 20/6 parts by weight ratio with 100 parts resin blend (Table 5) the elastic polymer produced by the boron oxide processing will become a thermally stable, high-temperature flexible elastic polymer up to 500°C because the silica is increasing the modulus to compensate for the plasticizing effect of the boron nitride which is thermally stable as a lubricant to 850°C (Reference 4).

### Boron Nitride and Residual Boron Oxide

Boron nitride retaining 2.0±1.0 wt.% boron oxide is available from the Momentive Performance Materials (grade SAM- 140) and ZYP Coating (grade ZPG- 18 and -19) Companies who can selectively provide this preferred residual boron oxide and within the boron nitride from their commercial synthesis and leaching production operations. This aggregate boron nitride retaining 2% residual boron oxide is superior to high purity boron nitride (requiring a separate catalyst addition) in processing efficiency and cost advantage.

The residual boron nitride containing the residual boron oxide is typically added up to 20 parts by weight for every 100 parts resin as shown in Table 3. The submicron boron nitride containing residual boron oxide is then about 16 wt. % of the resin blend and silica is added at 4.8 wt. %.

Boron nitride is subject to hydrolysis which is negligible (Reference 7) from ambient to less than 100°C, but when the temperature exceeds 100°C; particularly in autoclave processing, the hydrolysis of boron nitride readily produces noxious ammonia which was observed by the inventor.

The hydrolysis of boron nitride is controlled by the following processing procedures:
(1) The boron nitride containing the residual boron oxide is purchased free of moisture or ammonia and sealed in containers with appropriate desiccant, typically CaCl₂.
(2) The polymer reaction is staged under vacuum soak, so the press heat is restricted to less than the boiling point of water until the evolution of water is negligible, then the temperature is allowed to rise to 150°C where full pressure is applied.

Additionally, silica and boron nitride have been observed to unobviously heat stabilize the elastic phase of the resin blend when used in formulations such as shown in Table 5.

**Table 5**

| Heat Evaluation of Elastic Resin Blend Formulations | | | | |
|---|---|---|---|---|
| | | **Parts by Weight Additive Formulations** | | |
| **Parts by Wt. Resin Blend Components** | **Accumulated 1 Hour Soak Temperatures** | **10BN/6SiO₂/0.25B₂O₃** | **20BN/6SiO₂/0.4B₂O₃** | **6SiO₂/0.5B₂O₃** |
| 100 TPR 179 | @185°C (365°F) | Viscous liquid | Viscous liquid | ½ Liquid ½ Solid |
| | @260°C (500°F) | Viscous liquid | Gelatinous | Non rubber solid |
| | @330°C (625°F) | Elastic recovery (See Figure 1) | Elastic recovery (See Figure 1) | Eliminated |
| | @400°C (750°F) | Solid rubber w/ compression recovery | Solid rubber w/ compression recovery | Eliminated |
| 100 TPR 178 | @185°C (365°F) | Viscous liquid | Viscous liquid | Brittle foam elastic recovery |
| | @260°C (500°F) | Elastic recovery Rubber | Brittle foam elastic recovery | Non rubber solid |
| | @330°C (625°F) | Foaming solid rubber | Brittle foam | Eliminated |
| 100 Parts 2:1 Ratio 178:179 | @185°C (365°F) | Elastic recovery Rubber | Rubber agglomerates | Brittle foam rubber |
| | @260°C (500°F) | Brittle foam rubber | Completely solid | Eliminated non rubber |

### Unique blending method, mixing with acetone then stripping the acetone

A unique method of mixing the resin formulation has been discovered. The method incorporates the least amount of anhydrous acetone necessary to dissolve the flake resin which is typically 25 parts added to the preferred formulation shown in Table 4. The method uses additive co-mingling and acetone stripping equipment (capable of recovering the acetone) combined together to assure the initial polymerization of the resin precursors incorporates the solid submicron additives uniformly throughout as the resin blend is slowly produced at ambient temperature.

This specialized equipment assures that the boron oxide catalyst contained in the boron nitride particulate can uniformly activate the dehydration of the Si-OH groups to form long chain siloxane bonds, Si-O-Si as the acetone is stripped away. In this process, dehydration probably takes place between the Si-OH groups on the silanol-terminated polysiloxane and residual Si-OH groups on the silsequioxane polymer, leading to polycondensation and the formation of an interpenetrating network. The acetone at 16% of the mixture is removed during the mixing down to approximately 1%.

During the resin blend mixing and stripping of acetone, it is checked for the "gel" reaction time which generally ranges from 2 to 10 minutes at 177°C. Adjustments can be made by adding boron oxide or silica as required, generally this is not necessary.

### Prepreg

It is common practice in the art to calculate the values given in Tables 7a and 7b before setting up an impregnation production run to assure the prepreg produced will have the necessary composition needed to mold the final parts accurately to the desired molded finish laminate thickness. Excel spread sheets are commonly used for producing the Table 8 calculations revealing the range of laminate properties. Tables 7a and 7b provide examples of the calculated prepreg and molded laminate properties for two different fiber glass and ceramic fabrics common to the automotive and aerospace industries.

Tables 7a and 7b accurately predict the fabric reinforced polysiloxane composite cure ply thicknesses, t_{L}, calculated for S-glass 6781 and E-glass 1583 reinforcement of the resin blend's polysiloxane cured laminates. These tables also predict the cured laminate cure ply thickness, t_{L}, at different levels of reinforcement composition as well as the required prepreg composition and weight, Wₚ, necessary to produce each laminate thickness.

The entire impregnation is carried out cost effectively at ambient temperature not requiring solvents or heat. Standard metering blade "over-roll" or high speed "reverse roll" impregnating equipment are used to impregnate the fabric. The fabrics can be any of the glass (E-glass, S-glass, quartz or chemically altered variations of these), Nextel® or refractory (e.g., zirconia) high temperature fibers or advanced composite graphite or pitch fiber weaves or styles provided by the textile industry. When using graphite or pitch fabrics, electro-less metal (such as nickel or aluminum) coated fibers are preferred for producing these advance composite polysiloxane matrix composites with high performance mechanical properties. Nickel oxide activates the silicone resin blends just as aluminum oxide assuring increased bond strength.

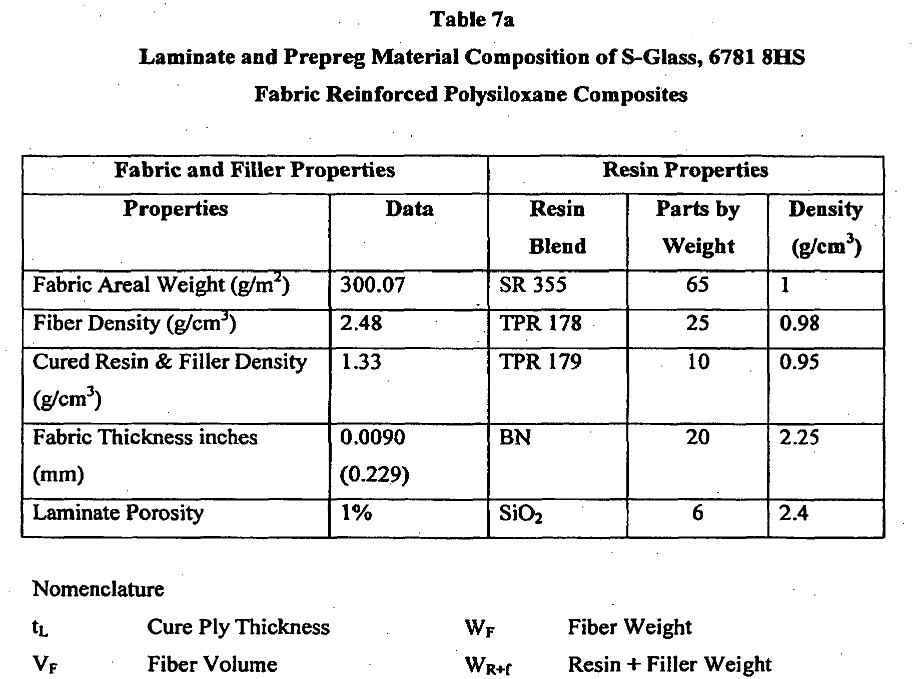

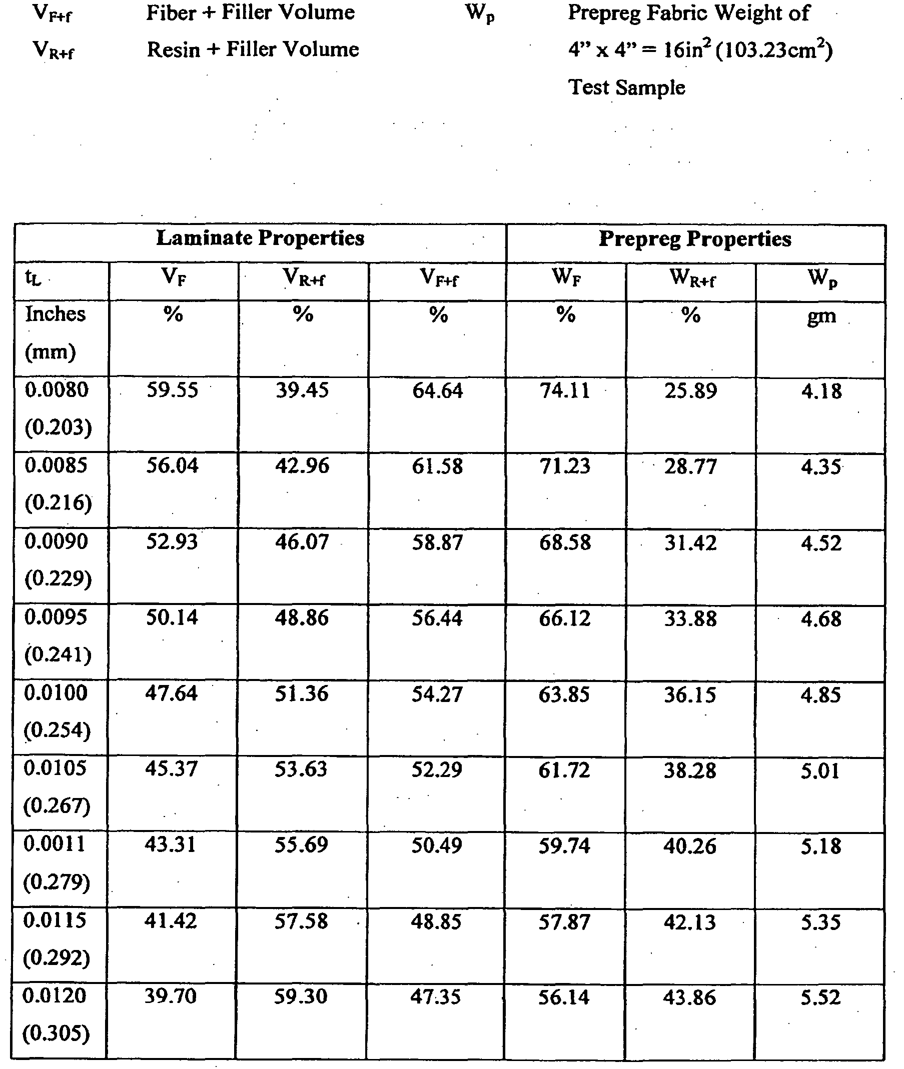

**Table 7b**

| **Laminate and Prepreg Material Composition of E-Glass, 1583** 8 **HS Fabric Reinforced Polysiloxane Composites** | | | | | | |
|---|---|---|---|---|---|---|
| **Fabric and Filler Properties** | | | **Resin Properties** | | | |
| **Properties** | | **Data** | **Resin Blend** | | **Parts by Weight** | **Density (g/cm³)** |
| Fabric Areal Wt. (g/m²) | | 560.80 | Dow Corning 249 | | 35 | 1.07 |
| Fiber Density (g/cm³) | | 2.585 | Dow Corning 233 | | 30 | 1.32 |
| Resin & Filler Density (g/cm³) | | 1.27 | Dow Corning 3037 | | 25 | 1.07 |
| Fabric Thickness inches(mm) | | 0.0179 (0.455) | Dow Corning MR2404 | | 10 | 1.11 |
| Laminate Porosity | | 1% | BN | | 20 | 2.25 |
| | | | SiO₂ | | 6 | 2.4 |

For Nomenclature, please see Table 7a.

| **Laminate Properties** | | | | **Density of Prepreg Resin and Additives** | | |
|---|---|---|---|---|---|---|
| t_{L} | V_{F} | V_{R+f} | V_{F+f} | W_{F} | W_{R+f} | Wₚ |
| In.(mm) | % | % | % | % | % | gm |
| 0.0140 (0.356) | 61.00 | 38.0 | 66.36 | 76.86 | 23.14 | 7.53 |
| 0.0145 (0.368) | 58.90 | 40.10 | 64.51 | 75.25 | 24.75 | 7.69 |
| 0.0150 (0.381) | 56.93 | 42.07 | 62.76 | 73.7 | 26.3 | 7.85 |
| 0.0155 (0.394) | 55.10 | 43.90 | 61.14 | 72.2 | 27.8 | 8.02 |
| 0.0160(0.406) | 55.38 | 45.62 | 59.62 | 70.8 | 29.2 | 8.18 |
| 0.0165 (0.419) | 51.76 | 47.24 | 58.19 | 69.4 | 30.6 | 8.34 |
| 0.0170 (0.432) | 50.24 | 48.76 | 56.84 | 68.2 | 31.9 | 8.49 |
| 0.0175 (0.445) | 48.80 | 50.20 | 55.56 | 66.9 | 33.1 | 8.65 |
| 0.0180 (0.457) | 47.44 | 51.56 | 54.36 | 65.7 | 34.3 | 8.81 |
| 0.0185 (0.470) | 46.16 | 52.84 | 53.23 | 64.5 | 35.5 | 8.98 |
| 0.0190 (0.483) | 44.95 | 54.05 | 52.16 | 63.4 | 36.6 | 9.13 |

**Table 8**

| **Volume and Mass Calculations Forecasting Table 8 Press Cured Laminate Properties from Prepreg Formulations** | | | |
|---|---|---|---|
| **Nomenclature** | | | |
| t_{F} | Cure ply thickness of fabric | W_{R} | Weight of resin |
| t_{L} | Cure ply thickness of laminate | W_{f} | Weight of filler |
| A_{w} | Areal weight of fabric | W_{BN} | Weight of boron nitride |
| A_{F} | Area of fabric | W_{SiO2} | Weight of silicon dioxide |
| A_{L} | Area of laminate | W_{L} | Weight of laminate |
| Aₚ | Area of prepreg | W_{F} | Weight of fiber |
| V_{F} | Volume of fibers | Wₚ | Weight of prepreg |
| V_{R+f} | Volume of resin + filler | W_{F+f} | Weight of fiber + filler |
| V_{f} | Volume of filler | *ρ*_{BN} | Density of boron nitride |
| Vₒ | Volume of voids | ρ_{SiO2} | Density of silicon dioxide |
| V_{L} | Volume of laminate | *ρ*_{R+f} | Density of resin + filler |
| V_{F+t} | Volume of fiber + filler | *ρ*_{F} | Density of fiber |

### Procedure and Calculations:

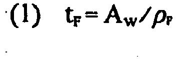

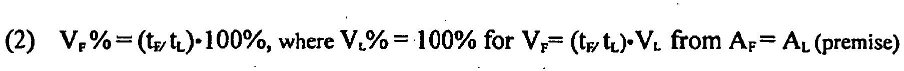

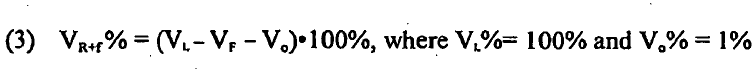

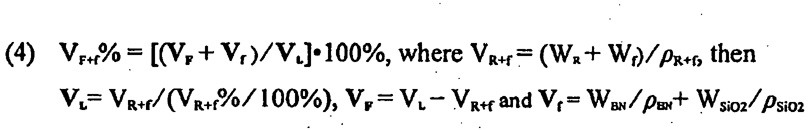

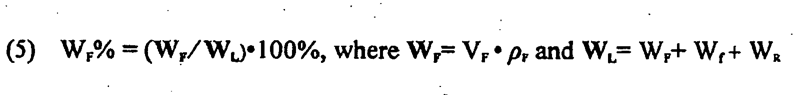

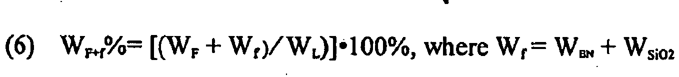

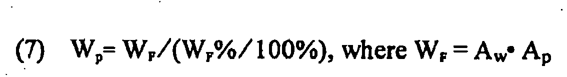

### Nylon fabric thermo-vaporization heat barrier for multiple stack laser cutting

The prepreg is processed into stacks of laminates (called "books") separated by unobvious layers of nylon fabric (e.g., style P2220 made by Cramer Fabrics, Inc.) peel ply which the inventor discovered through extensive laser testing will provide a thermo-barrier for multiple stack laser cutting. This allows multiple parts to be cut in one laser cutting operation without thermo-vaporizing the flammable top and edge of each stacked laminate at significant cost advantage.

### Lamination processing of stacked fiber reinforced polysiloxane prepreg.

Each ply of each prepreg layer is typically molded in a balanced architecture, e.g., 4-ply laminates for gaskets 1mm thick are molded with a (0° , +60°,-60°, 90°) balanced architecture (Reference 2), where the warp yarns are arbitrarily selected as the 0° primary reference.

A typical multiple platen stacked laminate press molding cycle consists of an ambient applied preload, followed by a 10 minute vacuum soak, followed by a 30 minute heat cycle to 95°C which is held until the loss of water from the condensation reaction is negligible, then the heat cycle is continued to 150°C where full pressure of 13.8 bar (200 psi) is applied, followed by a 190°C cure for 2 hours. The laminates are cooled down under pressure to 37°C, and then the platen pressure is reduced to preload, then ambient. After sufficient cooling, the book stacks are removed for multiple part laser cutting.

It has been observed by the inventor that the thickness of the composite laminate is the major cost and performance driver in making such products as automotive or aerospace gaskets. The laminate uniform thickness is the most critical quality control capability requirement for assuring high durability sealing of exhaust manifold gaskets operating at "spike" exhaust gas temperatures of 927°C. Pressure decay testing (Table 9) of laminate gaskets reveals the maximum thickness standard deviation should not be greater than +1.14 x 10⁻²mm (±0.45 x 10⁻³ inches) to assure extended durability. Laminates made to Table 7a composition requirements and molded to the above thickness standard deviation limits have performed well over 4 years in cab fleet testing (under confidentiality agreement) up to 520,000km (325,000 miles) (exceeding 240,000km (150,000 mile) test requirement).

**Table 9**

| Decay in Exhaust Gas Pressure from 2.07 bar (30 psi) (measured in minutes) | | | | |
|---|---|---|---|---|
| Sample# | Decay in pressure (psi) | Time (minutes) | Average thickness (inches) x 10⁻³ | Standard. Deviation x 10⁻³ |
| T-1 | 29.4 | 40 | 30.83 | ± 0.41 |
| T-2 | 27.2 | 40 | 31.70 | ±0.45 |
| T-3 | 27.0 | 40 | 31.25 | ± 0.52 |
| T-4 | 25.0 | 0.83 | 31.50 | ±0.55 |
| T-5 | 25.0 | 1.17 | 31.50 | ±0.78 |

### Laser cutting of cured laminate book stacks

The laser cutting procedure uses a carbon dioxide laser with nitrogen purge that produces a ceramic sealed cut edge depending upon which ceramic fiber is used for the laminate reinforcement and the laser cut parts have up to 25% higher tensile strength compared to mechanically sheared parts. The following preferred carbon dioxide power settings are used to cut multiple stack laminates with up to 16,500°C focus point to vaporize the laminate's cut edge. The typical power set up for laser cutting book stacks of multiple laminate is: Carbon dioxide production laser cutting set up:

### Carbon dioxide production laser cutting set up:

| | |
|---|---|
| Focal length | 7 inches (17.78 cm) |
| Beam diameter | 0.6 inches (1.52 cm) |
| Laser wavelength | 10.6 micron |
| Focal point diameter | 0.124 inches (0.0315 cm) |
| Laser power | 3500 watt |
| Laser Power/Area | 4.5x10⁹ watt/m² |
| Temperature at focus | 16,785 K (16,510°C) |

The multiple stack.laminate laser cutting is achieved for significant cost advantage by using the following unobvious materials and processes:
(1) A heat barrier nylon fabric is initially placed between laminates molded together in "book stacks"enabling the multiple laminates to be protected from interface thermo-vaporization.
(2) A nitrogen purge is applied to cover the cutting focus point at a 1.5mm nozzle gap expelling nitrogen gas at 142 psi from a 2mm nozzle orifice, and
(3) the preferred carbon dioxide power settings (shown above) are used to cut multiple stack laminates with a up to 16,500°C focus point that vaporizes the laminate stack as it is cut, but not the laminate interface protected by the heat protected nylon fabric separator peel plies. The power set up enables book stacks of 10 to 20 laminates to be laser cut at a time with higher cutting capacity if needed.

### Compression - Recovery Fatigue Testing

When the laminates made from the resin blend are compressed under standard gasket bolt torque requirements they will typically compress 10% of their initial thickness. When surface coatings are added, the compressed thickness will increase to 12 to 15% depending on the type of surface coating. Table 7a reveals for an uncompressed cure ply thickness, t_{L} of 0.267mm, a 10% compression to a t_{L} of 0.241mm will change the cured laminate reinforcement volume, V_{F+f}, from 52% to 56% realizing a higher composite fiber restraining capability for mechanically assisted elastic recovery. The change in volume is primarily due to the collapse of the matrix and surface coating porosity from the applied bolt torque compression causing the matrix thickness change. This compressed reinforcement is responsible for restraining the compression load until the applied load is released.

The following mechanical properties are found for Table 7a laminates cured at 315°C:

| | | | | |
|---|---|---|---|---|
| ASTM-F-36; Procedure A | Pulse Compression Fatigue 40 Hz for 10,000,000 cycles for 315°C post cure with a load of 5.9kN to 14.5kN | Thickness 1.05mm | Recovery 73.4% | Compression 15.2% |

Figure 1 reveals the laminate thickness recovery after 15% compression and 10,000,000 compression recovery cycles at different temperatures, e.g., at 200°C there is 87% recovery and approximately 63% recovery at 400°C. Also, the hotter the steel bolted aluminum clamped laminate joint becomes, the greater the anisotropic thermal expansion sealing pressure exerted by the trapped polysiloxane matrix. In contrast, at the minimum automotive engine design operating temperature of -40°C, the elastic recovery of the matrix prevents cold start blow outs. Deep thermo-shock testing under pressures higher than exhaust manifold pressures is utilized to verify the thermal cycling capability.

### Porosity Advantages

An important consideration revealed by Figure 3 and Table 7 is the important role that porosity plays in the performance of the flexible laminates. When the gaskets are initially molded an allowance of 1% porosity provides a fiber volume %, V_{F}%, of 50.2% for a cure ply thickness, t_{L}, of 0.24mm (0.0095 inches). Since there are 4 plies in a standard gasket which is 1mm or 0.039 inches thick, the desired as compressed thickness is ¼ = 0.25 mm (0.039/4 = 0.010 inches). Allowing for 10% compression, the initial as molded thickness needs to be 0.039/0.90 = 0.043 with a t_{L}, = 1.09/4 0 = 0.28mm (0.043/4 = (0.011 inches).

Figure 3 reveals the porosity created when the gaskets are cured at different temperatures. When first molded the cure temperature is 177°C with approximately 1% porosity, but after post cure at 400°C, the porosity is approximately 11%. The fiber + filler volume is approximately constant because the compression at 10% is absorbed by the 11% porosity minimizing lateral displacement of the matrix. Also, the porosity is produced in the cured polymer matrix and surface coatings. Table 7 reveals that the fiber + filler volume % , V_{F+f} % , at t_{L} of 0.43mm (0.011 inches) is 54.9%. Table 10 reveals the unobvious invention of using the porosity to store sealing surface sealant until the laminate is compressed 10% reducing the porosity from 11% to 1%. The porosity also reduces the degree of lateral displacement that would occur in the matrix if the porosity were not free to absorb the compression (see Table 10).

The porosity is filled with the densification resin blend made with Dow Corning 233 flake resin at 65 parts by weight added to 35 parts Dow Corning 3037 intermediate liquid resin to make up the 100 parts resin to which 20 parts boron nitride and 6 parts silica are added and mixed with the 25 parts acetone. Figure 4 reveals how this deep penetrating resin blend is used for densification.

**Table 10**

| **Porosity Absorbed Compression** | | | | | |
|---|---|---|---|---|---|
| **Comment** | **Cure Temp.°C** | **t_{L} (inches)** | **V_{F+f} %** | **V_{R} %** | **Porosity, Vₒ %** |
| as molded | 150 | 0.011 | 54.9 | 44.1 | 1 |
| post cure | 400 | 0.011 | 54.9 | 34.1 | 11* |
| 10% compression | Ambient | 0.010 | 54/.90 = 61 | 38 | 1 |

| | | | | | |
|---|---|---|---|---|---|
| *The porosity of 11% is filled with resin blend by thermally quenching the hot laminate from 200°C to ambient in the presence of resin blend in one operation, reducing the porosity to 1%. When the laminate is compressed the resin blend is displaced as clamping surface sealant. See Table 8 for t_{L}, V_{F+f}, V_{R} and Vₒ Nomenclature. | | | | | |

### Thermo-Quench Processing

Additionally, fast thermal quench heat treat processes are used to impregnate pyrolyzed porous polymer or ceramic products, e.g., 12% porosity can be brought to less than 1% in one operation. This same thermal quench process is used to fast impregnate braid and twisted yarn rolls in one operation for producing rod reinforcement for high temperature liquid sealants or "○" ring seals. Essentially all Table 6 resin formulations can be thermal quenched from the last laminate cure temperature. The exception is when using rod filled resins for making "pyroformed" viscoelastic gasket type products.

### Prototype Parts

Many prototype parts have been made (under confidentiality agreement) which demonstrate that most engine components of diesel, internal combustion (IC) and turbine engines that operate from 500 to 1000°C can be made with fiber reinforced composites made with the resin blend. Examples include engine gaskets, push rods, valves, pistons, brakes, multiple ignition fuel saving devices, turbine engine combustion liners, compression blades, diesel engine head and exhaust gaskets and rocket motors, fire walls, and liquid exhaust gaskets and high temperature sealants.

### Testing

Testing (under confidentiality agreement) has been extensive on IC engine dynamometers including cab fleet testing and deep thermal shock, steam testing of head gaskets and multispark ignition prototypes. Automotive, coolant, oil and combustion gas sealing has been tested and reviewed with major automotive companies (under confidentiality agreement) including fleet testing. Liquid exhaust gaskets and multiple ignition composite devices are recent developments which solves current costly pollution and fuel burning efficiency automotive IC engine CAFE standards capability requirements.

Fire protective testing of the inventions under FAA typical tests has proven the superior performance of the discoveries to pass the FAA major testing requirements for aircraft interior, cargo container, fire blankets and fire wall requirements. The composites have passed FAA fire penetration, burn through, heat release (< 10 kW/m²), smoke density and Boeing toxicity testing per BSS 7239.

Ford Crown Victoria 4.6 liter V8 engine FC and MLS exhaust manifold gaskets were comparison tested (under confidentiality agreement) using pressure decay measured from an initial 2.07 bar (30 psi) applied pressure with the gaskets bolted between aluminum and iron sealing surfaces using standard studs and lock nuts and placed within an oven at 350°C. The pressure decay curves shown in Figure 5 reveal that FC gaskets had essentially no leakage compared to the MLS gaskets which leaked severely. The FC exhaust gasket matrix material when used as an exhaust manifold sealant was also evaluated for a year (under confidentiality agreement) on Jasper Engine Company Generators powered with Ford 460 V8 truck engines. All engines performed without a problem for 6640 hours which is equivalent to 640,000km (400,000 miles) of truck engine durability. Cab fleet testing has confirmed the durability in performing over 560,000 (350,000 miles) in Crown Victoria 4.6 liter V8 engine exhaust manifold composite gasket testing.

## Claims

1. An elastic composite formed by heat and pressure curing a prepreg having up to 80 weight % reinforcement and 20 to 50 weight percent of a silicone resin blend and filler, with the prepreg resin blend formulation having a specific gravity of 1.27±0.25 gm/cc, wherein the silicone resin blend and filler consist of:
a high molecular-weight (MW) flake silicone resin; an intermediate MW liquid precursor and optionally, a low MW liquid resin, e.g., 5000MW;
submicron boron oxide/nitride aggregates as a catalyst in a resin to aggregate weight ratio of 20/1 to 2.5/1, where the boron oxide content of the boron oxide/boron nitride aggregate is 0.5 to 5 wt.% of the boron oxide/nitride aggregate content,
and the filler is a submicron refractory filler selected from the group comprising submicron silica, finely divided silica gel, fumed silica, diatomaceous earth, silicon carbide, alumina, zirconia and mixtures thereof,
to provide a high temperature cured composite having a porosity from 10 to 20% arising from a pyrolizing step carried out at a temperature from 300 to 1000°C with the resin blend,
wherein the flake resin is a dimethylsiloxane polymer containing phenyl silsesquioxane units,
wherein the liquid intermediate MW silicone resin is selected from a group consisting of dimethylsiloxane polymers with methyl silsesquioxanes-methoxy terminated, and
wherein the liquid low MW silicone resin is selected from silanol terminated, polydimethylsiloxanes and mixtures thereof.

2. The composite of claim 1, wherein the composite comprises in parts by weight,
(1) dimethylsiloxane polymers containing phenylsilsesquioxanes 40-70,
(2) dimethylsiloxane polymers containing methylsilsesquioxanes-, methoxy terminated 5-25
(3) silanol terminated, polydimethylsiloxane 5-25,
(4) catalyst submicron aggregate boron oxide/nitride 5-40,
(5) boron oxide catalyst content of (4) at 2±1.0 wt.% 0.08-1.0,
(6) silica (submicron) and other fillers of claim 1 3-15.

3. The composite of claim 1, wherein the composite comprises in parts by weight,
(1) dimethylsiloxane polymers containing phenylsilsesquioxanes 65
(2) dimethylsiloxane polymers containing methylsilsesquioxanes methoxy terminated 10
(3) silanol terminated polydimethylsiloxane 25
(4) catalyst submicron aggregate boron oxide/nitride 20
(5) boron oxide catalyst content of (4) at 2±1.0 wt.% 0.3-0.5
(6) silica (submicron) and other fillers of claim 1, 6-20.

## Patentansprüche

1. Elastisches Verbundmaterial, gebildet durch Wärme- und Druckhärten eines Prepregs mit bis zu 80 Gewichtsprozent Verstärkung und 20 bis 50 Gewichtsprozent Silikonharzmischung und Füllstoff, wobei die Prepreg-Harzmischungs-Formulierung eine spezifische Dichte von 1,27±0,25 gm/cc aufweist, wobei die Silikonharzmischung und der Füllstoff bestehen aus:
einem Flocken-Silikonharz mit hohem Molekulargewicht (MW); einem flüssigen Vorläufer mit mittlerem MW und, optional, einem flüssigen Harz mit niedrigem MW, z.B. 5000MW;
Submikron-Boroxid/nitrid-Aggregate als Katalysator in einem Gewichtsverhältnis von Harz zu Aggregat von 20/1 bis 2,5/1, worin der Boroxid-Gehalt des Boroxid/Bornitrid-Aggregats 0,5 bis 5 Gewichtsprozent des Boroxid/nitrid-Aggregat-Gehaltes beträgt,
und der Füllstoff ein feuerfester Submikron-Füllstoff ist, der ausgewählt ist aus der Gruppe, die Submikron-Siliciumdioxid, fein verteiltes Kieselgel, pyrogenes Siliciumdioxid, Kieselgur, Siliciumcarbid, Aluminiumoxid, Zirkoniumoxid und Mischungen derselben umfasst,
um ein bei hoher Temperatur gehärtetes Verbundmaterial bereitzustellen, welches eine Porosität von 10 bis 20% aufweist, die durch einen Pyrolyseschritt entsteht, der bei einer Temperatur von 300 bis 1000 °C an der Harzmischung durchgeführt wird,
wobei das Flockenharz ein Dimethylsiloxan-Polymer ist, das Phenyl-Silsesquioxan-Einheiten enthält,
wobei das flüssige Silikonharz mit mittlerem MW ausgewählt ist aus einer Gruppe bestehend aus Dimethylsiloxan-Polymeren mit Methyl-Silsesquioxanen mit Methoxy-Endgruppen, und
wobei das flüssige Silikonharz mit niedrigem MW ausgewählt ist aus Polydimethylsiloxanen mit Silanol-Endgruppen und Mischungen derselben.

2. Verbundmaterial nach Anspruch 1, wobei das Verbundmaterial in Gewichtsteilen umfasst:
(1) Dimethylsiloxan-Polymere, die Phenysilsesquioxane enthalten: 40-70,
(2) Dimethylsiloxan-Polymere, die Methylsilsesquioxane mit Methoxy-Endgruppen enthalten: 5-25,
(3) Polydimethylsiloxan mit Silanol-Endgruppen: 5-25,
(4) Katalysator Submikron-Boroxid/nitrid-Aggregat: 5-40,
(5) Boroxid-Katalysator-Gehalt von (4) bei 2±1,0 Gewichtsprozent: 0,08-1,0,
(6) Siliciumdioxid (Submikron) und andere Füllstoffe nach Anspruch 1: 3-15.

3. Verbundmaterial nach Anspruch 1, wobei das Verbundmaterial in Gewichtsteilen umfasst:
(1) Dimethylsiloxan-Polymere, die Phenylsilsesquioxane enthalten: 65
(2) Dimethylsiloxan-Polymere, die Methylsilsesquioxane mit Methoxy-Endgruppen enthalten: 10
(3) Polydimethylsiloxan mit Silanol-Endgruppen: 25
(4) Katalysator Submikron-Boroxid/nitrid-Aggregat: 20
(5) Boroxid-Katalysator-Gehalt von (4) bei 2±1,0 Gewichtsprozent: 0,3-0,5
(6) Siliciumdioxid (Submikron) und andere Füllstoffe nach Anspruch 1: 6-20.

## Revendications

1. Composite élastique formé par durcissement à la chaleur et à la pression d'un pré-imprégné ayant jusqu'à 80 % en poids de renforcement et 20 à 50 pour cent en poids d'un mélange de résine de silicone et d'une charge, la formulation de mélange de résine pré-imprégnée ayant une gravité spécifique de 1,27 ± 0,25 gm/cc, le mélange de résine de silicone et la charge étant constitués de :
une résine de silicone en flocons de haut poids moléculaire (MW) ; un précurseur liquide de MW intermédiaire et éventuellement, une résine liquide de faible MW, par exemple, 5000 MW ;
des agrégats d'oxyde/nitrure de bore submicrométriques comme catalyseur dans une résine pour agréger un rapport en poids de 20/1 à 2,5/1, où la teneur en oxyde de bore de l'agrégat oxyde de bore/nitrure de bore est de 0,5 à 5 % en poids de la teneur en agrégat d'oxyde/nitrure de bore,
et la charge est une charge réfractaire submicrométrique choisie dans le groupe comprenant la silice submicrométrique, un gel de silice finement divisé, la silice fumée, la terre de diatomée, le carbure de silicium, l'alumine, l'oxyde de zirconium et leurs mélanges,
pour fournir un composite durci à haute température ayant une porosité de 10 à 20 % provenant d'une étape de pyrolyse réalisée à une température de 300 à 1000 °C avec le mélange de résine,
la résine de flocons étant un polymère de diméthylsiloxane contenant des unités silsesquioxane de phényle,
la résine de silicone à MW intermédiaire liquide étant choisie dans un groupe constitué par des polymères de diméthylsiloxane terminés avec des méthyl silsesquioxanes-méthoxy, et
la résine de silicone de faible MW liquide étant choisie parmi des polydiméthylsiloxanes terminés par un silanol, et leurs mélanges.

2. Composite selon la revendication 1, dans lequel le composite comprend en parties en poids,
(1) des polymères de diméthylsiloxane contenant des phénylsilsesquioxanes 40-70,
(2) des polymères de diméthylsiloxane contenant des méthylsilsesquioxanes, terminés par un méthoxy 5-25,
(3) un polydiméthylsiloxane 5-25, terminé par un silanol,
(4) un catalyseur oxyde/nitrure de bore agrégat submicrométrique 5-40,
(5) une teneur de catalyseur d'oxyde de bore (4) à 2 ± 1,0 % en poids 0,08-1,0,
(6) de la silice (submicrométrique) et d'autres charges selon la revendication 1 3-15.

3. Composite selon la revendication 1, dans lequel le composite comprend en parties en poids,
(1) des polymères de diméthylsiloxane contenant des phénylsilsesquioxanes 65,
(2) des polymères de diméthylsiloxane contenant des méthylsilsesquioxanes terminés par un méthoxy 10,
(3) un polydiméthylsiloxane terminé par un silanol 25,
(4) un catalyseur oxyde/nitrure de bore agrégat submicrométrique 20,
(5) une teneur de catalyseur d'oxyde de bore (4) à 2 ± 1,0 % en poids 0,3-0,5,
(6) de la silice (submicrométrique) et d'autres charges selon la revendication 1, 6-20.
